# EUROPÄISCHE PATENTSCHRIFT

(11) **EP 2 546 153 B1**
(45) Veröffentlichungstag und Bekanntmachung des Hinweises auf die Patenterteilung: **09.09.2015**
(21) Anmeldenummer: 11005694.2
(22) Anmeldetag: 13.07.2011
(51) Int. Cl.: B65B 5/10, B65B 35/16, B25J 9/00, B65G 61/00

(54) **Vorrichtung und Verfahren zum Stapeln von stapelbaren Teilen**
Device and method for stacking stackable pieces
Dispositif et procédé pour empiler des pièces empilables

(43) Veröffentlichungstag der Anmeldung: 16.01.2013
(73) Patentinhaber: Schuler Automation GmbH & Co. KG, 91093 Hessdorf (DE)
(72) Erfinder: Dörner, Reiner, 75031 Eppingen (DE)
(74) Vertreter: Patentanwälte Magenbauer & Kollegen Partnerschaft mbB

(56) Entgegenhaltungen:
- EP-A1- 1 647 485
- EP-A1- 2 174 869
- DE-A1- 19 826 270
- DE-A1- 19 934 618
- GB-A- 2 092 090
- US-B1- 7 644 558

## Beschreibung

Die Erfindung umfasst eine Vorrichtung zum Stapeln von stapelbaren Teilen, insbesondere Pressteilen, mit einer Förderstation mit wenigstens einer Förderbahn, auf der die Teile vereinzelt antransportierbar sind, und wenigstens einem Stapelbehälter, in den die Teile einstapelbar sind, wobei zur Überführung der Teile zwischen der Förderstation und dem Stapelbehälter eine Stapeleinrichtung vorgesehen ist, die Teile von der Förderbahn der Förderstation aufnimmt und in den Stapelbehälter einstapelt.

Das Dokument EP 2 174 869 A1 zeigt eine Stapelvorrichtung mit ein paar Stapelroboter.

Derartige Stapeleinrichtungen sind insbesondere auf dem Gebiet der Automatisierungstechnik seit langem bekannt. Beispielsweise werden sie in Pressenstraßen dazu verwendet, mittels einer Presse umgeformte Pressteile, die über eine Förderstation zur Stapeleinrichtung gelangen, aufzunehmen und in einen hierfür vorgesehenen Stapelbehälter einzustapeln.

Die in Pressenstraßen eines Presswerks eingesetzte Transfer- oder Umformpressen haben eine spezifische Pressenleistung, die sich in Hüben pro Minute angeben lässt. So sind beispielsweise 17-Hub-Transferpressen bekannt, die in 17 Hüben pro Minute 17 Einzel-, Doppel- oder Vierfachteile pressen können. Demzufolge besteht der Bedarf, dass die nachgeschaltete Stapeleinrichtung eine Stapelleistung aufweist, die an die Pressenleistung der Transferpresse angepasst ist, insbesondere deutlich höher ist, so dass die Pressteile zügig ohne Teilestau in die hierfür vorgesehenen Stapelbehälter eingestapelt werden können.

Aufgabe der Erfindung ist es daher, eine Vorrichtung der eingangs erwähnten Art und ein Verfahren zu schaffen, mit der beziehungsweise mit dem die Anzahl an stapelbaren Teilen, die in einem bestimmten Zeitabschnitt von der Förderbahn aufgenommen und in einen hierfür vorgesehenen Stapelbehälter eingestapelt werden können, gegenüber dem Stand der Technik gesteigert werden kann.

Diese Aufgabe wird mit einer Vorrichtung zum Stapeln von stapelbaren Teilen mit den Merkmalen des unabhängigen Anspruchs 1 und einem Verfahren zum Stapeln von stapelbaren Teilen mit den Merkmalen des unabhängigen Anspruchs 8 gelöst. Weiterbildungen der Erfindung sind in den Unteransprüchen dargestellt.

Die erfindungsgemäße Vorrichtung zum Stapeln von stapelbaren Teilen zeichnet sich dadurch aus, dass die Stapeleinrichtung wenigstens ein, zwei unabhängig voneinander arbeitende Stapelroboter enthaltendes Stapelroboter-Paar aufweist, wobei die Stapelroboter im Wechsel oder gleichzeitig Teile von der Förderbahn aufnehmen und über eine Steuereinrichtung derart angesteuert sind, dass ein erster und/oder zweiter Stapelroboter wenigstens ein Teil von der Förderbahn aufnimmt, während gleichzeitig der zweite und/oder erste Stapelroboter ein bereits aufgenommenes Teil an den von beiden Stapelrobotern genutzten Stapelbehälter überführt oder dort einstapelt, wobei bei gleichzeitiger Aufnahme der Teile durch ersten und zweiten Stapelroboter ein gleichzeitiges Einstapeln in den gemeinsamen Stapelbehälter an zwei verschiedenen Stapelplätzen erfolgt.

Beide Stapelroboter eines Stapelroboter-Paares stapeln also Teile in denselben, gemeinsamen Stapelbehälter ein. Das Aufnehmen der Teile von der Förderbahn, die zweckmäßigerweise als Transportband ausgebildet ist, erfolgt vorzugsweise durch beide Stapelroboter eines Stapelroboter-Paares an derselben Aufnahmestelle an der Förderbahn oder an eng beieinanderliegenden Aufnahmestellen. Es ist möglich, dass die beiden Stapelroboter eines Stapelroboter-Paares im Wechsel arbeiten, das heißt, wenn der erste Stapelroboter ein Teil von der Förderbahn aufnimmt, stapelt der zweite Stapelroboter ein bereits aufgenommenes Teil in die Stapelbehälter ein und umgekehrt. In diesem Fall können erster und zweiter Stapelroboter an dieselbe Aufnahmestelle am Förderband zugreifen. Alternativ ist es möglich, dass die beiden Stapelroboter eines Stapelroboter-Paares zeitversetzt arbeiten, das heißt, wenn der erste Stapelroboter ein Teil von der Förderbahn aufnimmt, überführt der zweite Stapelroboter ein bereits aufgenommenes Teil an den Stapelbehälter. In diesem Fall findet also nicht zeitgleich Aufnehmen und Einstapeln, sondern Aufnehmen und Überführen statt. Ferner ist es möglich, dass die beiden Stapelroboter eines Stapelroboter-Paares gleichzeitig Teile an dann voneinander verschiedenen, aber eng beieinanderliegenden Aufnahmestellen aufnehmen und auch gleichzeitig an zwei verschiedenen Stapelplätzen, die auch als sogenannte Nester bezeichnet werden können, in den Stapelbehälter einstapeln. Bei der ersten Variante, bei den im Wechsel arbeitenden Stapelrobotern, können die Stapelroboter synchron angesteuert werden. Dadurch werden Stillstandszeiten vermieden, das heißt, keiner der Stapelroboter muss darauf warten, dass der jeweils andere Stapelroboter seine Arbeitsbewegung ausgeführt hat, bevor er seinerseits seine Arbeitsbewegung ausführen kann. Auch bei der dritten Variante, dem gleichzeitigen Aufnehmen von zwei verschiedenen Teilen durch die beiden Stapelroboter, lassen sich Stillstandszeiten vermeiden. Insgesamt ist die Stapelleistung einer mit wenigstens einem Stapelroboter-Paar ausgestatteten Stapeleinrichtung gegenüber dem Stand der Technik, bei der beispielsweise zwei räumlich relativ weit voneinander entfernte Stapelroboter eingesetzt werden, die dann in unterschiedliche Stapelbehälter einstapeln, deutlich erhöht, da hier im Vergleich insbesondere die Zeit für den Weitertransport der Teile an den nachgeordneten zweiten Stapelroboter entfällt.

Bei einer Weiterbildung der Erfindung sind mehrere Stapelroboter-Paare vorgesehen, denen jeweils ein eigener, beim Einstapeln der Teile durch beide Stapelroboter eines jeweiligen Stapelroboter-Paares gemeinsam genutzter Stapelbehälter zugeordnet ist. Durch das Vorhandensein mehrerer Stapelroboter-Paare lässt sich die Stapelleistung der Stapeleinrichtung noch weiter erhöhen.

Die Stapelroboter-Paare können in Reihe entlang einer gemeinsamen Förderbahn angeordnet sein. Dabei können in Förderrichtung Teile zuerst erreichter Stapelroboter-Paare Teile zum Einstapeln für nachgeordnete Stapelroboter-Paare durchlassen. Bei im Wechsel arbeitenden Stapelrobotern eines Stapelroboter-Paares kann also im Fall von zwei hintereinander angeordneten Stapelroboter-Paaren jedes zweite Teil durchgelassen und an das nachgeordnete Stapelroboter-Paar weitertransportiert werden.

Damit die Bauabmessung der Stapeleinrichtung in Förderrichtung nicht zu groß wird, ist es zweckmäßig, Stapelroboter-Paare parallelzuschalten und auf mehrere parallel zueinander angeordnete Förderbahnen der Förderstation aufzuteilen. Die Teile können also vereinzelt auf wenigstens zwei parallel zueinander verlaufenden Förderbahnen der Förderstrecke antransportiert werden.

Bei einer Weiterbildung der Erfindung sind dem wenigstens einen Stapelroboter-Paar mehrere Stapelbehälter zugeordnet, von denen jeweils beim Einstapeln nur einer durch die beiden Stapelroboter des Stapelroboter-Paares beladen wird, während die anderen Stapelbehälter unbeladen in Wartestellung sind. Die Stapelroboter eines Stapelroboter-Paares beladen also zunächst einen gemeinsamen Stapelbehälter, der dann nach dem Beladen abtransportiert wird. In diesem Fall können die beiden Stapelroboter eines Stapelroboter-Paares dann ohne Stillstandszeiten auf den in der Wartestellung befindlichen weiteren Stapelbehälter zugreifen. Es muss also nicht gewartet werden, bis der beladene Stapelbehälter durch einen unbeladenen ersetzt ist. Die Stapelbehälter, die einem Stapelroboter-Paar zugeordnet sind, können entlang der Förderbahn nacheinander angeordnet sein. Alternativ ist es möglich, die Stapelbehälter links und rechts der Förderbahn anzuordnen.

Zweckmäßigerweise weist die Stapeleinrichtung eine Verfahreinrichtung zum Verfahren der Stapelbehälter zwischen einer Beladeposition und einer Wechselposition auf, in der mit eingestapelten Teilen beladene Stapelbehälter durch unbeladene ersetzt werden. Der Austausch von beladenen durch unbeladene Stapelbehälter kann also automatisiert erfolgen.

Bei einer Weiterbildung der Erfindung sind die beiden Stapelroboter jeweils als Mehrachs-Knickroboter ausgebildet, mit wenigstens vier Schwenkachsen, von denen eine erste vertikale Schwenkachse die zwischen der Förderbahn und dem Stapelbehälter stattfindende Schwenkbewegung ermöglicht. Durch die mindestens vier Achsen ist ein positionsgenaues Zustellen der Stapelroboter an die auf der Förderbahn transportierten Teile und an den Stapelbehälter möglich, um dann mittels einer definierten Hubbewegung die Teile aufzunehmen beziehungsweise in den Stapelbehälter abzulegen. Zweckmäßigerweise werden Fünf-, Sechs- oder gar Siebenachs-Knickroboter verwendet.

Es ist möglich, dass die Stapeleinrichtung eine Linearführungseinrichtung zur horizontalen Linearführung der beiden Stapelroboter aufweist. Dadurch können die beiden Stapelroboter beispielsweise nach dem Abschluss des Beladevorgangs eines Stapelbehälters an den in Wartestellung befindlichen weiteren Stapelbehälter gefahren werden. Die Stapelroboter können also wenigstens eine zusätzliche Linearachse besitzen, wodurch auch nicht im Schwenkbereich der jeweiligen Stapelroboter liegende Abstände zwischen der Förderbahn und dem Stapelbehälter mittels kombinierter Schwenk- und Linearbewegung überbrückt werden könnten. Befinden sich die Stapelbehälter eines Stapelroboter-Paares entlang der Förderbahn hintereinander angeordnet, so können die beiden Stapelroboter also beispielsweise in X-Richtung verfahren werden. Jedoch ist auch eine Querbewegung der Stapelroboter in Y-Richtung möglich, falls sich die Stapelroboter links und rechts der Förderbahn befinden.

Es ist möglich, dass wenigstens einer der Roboter hängend an einer Trageinrichtung angeordnet ist. Vorteilhafterweise sind beide Roboter hängend angeordnet. Alternativ ist jedoch auch eine stehende Anordnung wenigstens eines Stapelroboters möglich.

Die Erfindung umfasst ferner ein Verfahren zum Stapeln von stapelbaren Teilen, insbesondere Pressteilen, das sich durch folgende Verfahrensschritte auszeichnet:
- Antransport von auf wenigstens einer Förderbahn vereinzelt abgelegter Teile,
- Aufnehmen von Teilen von der Förderbahn mittels eines, zwei unabhängig voneinander arbeitende Stapelroboter enthaltenden Stapelroboter-Paares, wobei ein erster Stapelroboter ein Teil von der Förderbahn aufnimmt, während gleichzeitig ein bereits aufgenommenes Teil durch einen unabhängig vom ersten Stapelroboter arbeitenden zweiten Stapelroboter in einen Stapelbehälter eingestapelt oder an den Stapelbehälter überführt wird oder wenigstens ein anderes Teil von der Förderstrecke aufnimmt, wobei im Falle des Überführens dies mittels einer ein Verschwenken des zweiten Stapelroboters umfassenden Überführungsbewegung erfolgt,
- Überführen des durch den ersten Stapelroboter aufgenommenen Teils an den Stapelbehälter, der im Falle des Einstapelns oder Überführens bereits durch den zweiten Stapelroboter genutzt wurde, durch eine Überführungsbewegung, die ein Verschwenken des ersten Stapelroboters umfasst, während gleichzeitig der zweite Stapelroboter das aufgenommene andere Teil in den Stapelbehälter einstapelt oder unbestückt rückgeführt wird oder an den Stapelbehälter überführt,
- Einstapeln des vom ersten Stapelroboter aufgenommenen Teils in den Stapelbehälter, während gleichzeitig der zweite Stapelroboter ein weiteres Teil von der Förderbahn aufnimmt, unbestückt rückgeführt wird oder das aufgenommene andere Teil in denselben Stapelbehälter, der vom ersten Stapelroboter zum Einstapeln genutzt wird, in einen anderen Stapelplatz einstapelt.

Bevorzugte Ausführungsbeispiele der Erfindung sind in der Zeichnung dargestellt und werden im Folgenden näher erläutert. In der Zeichnung zeigen:
- Figur 1: eine Seitenansicht auf einen Teil einer Pressenstraße mit Transferpresse und erfindungsgemäßer Vorrichtung zum Stapeln stapelbarer Teile,
- Figur 2: einen Querschnitt durch die Vorrichtung zum Stapeln stapelbarer Teile von Figur 1 quer zur Förderrichtung,
- Figur 3: eine Seitenansicht eines ersten Ausführungsbeispiels der erfindungsgemäßen Vorrichtung,
- Figur 4: eine Draufsicht auf die Vorrichtung von Figur 3,
- Figur 5: eine Seitenansicht eines zweiten Ausführungsbeispiels der erfindungsgemäßen Vorrichtung und
- Figur 6: eine Draufsicht auf die Vorrichtung von Figur 5.

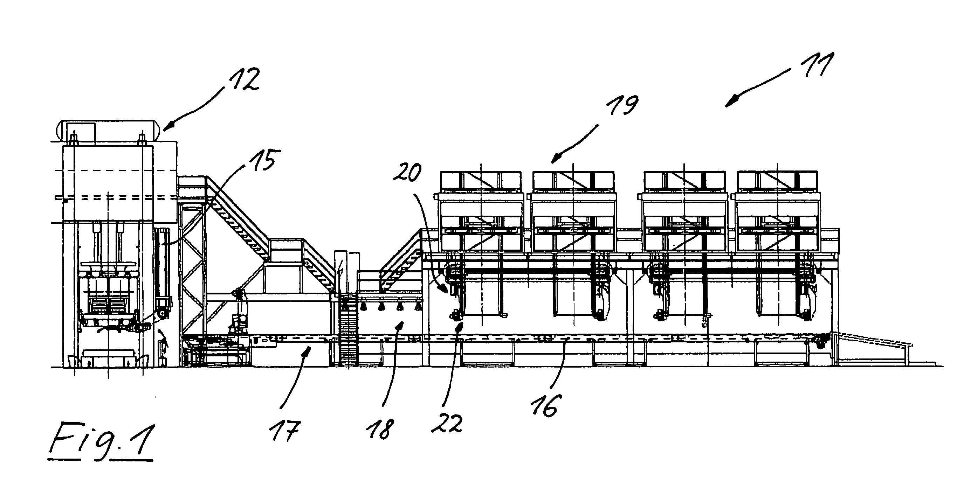

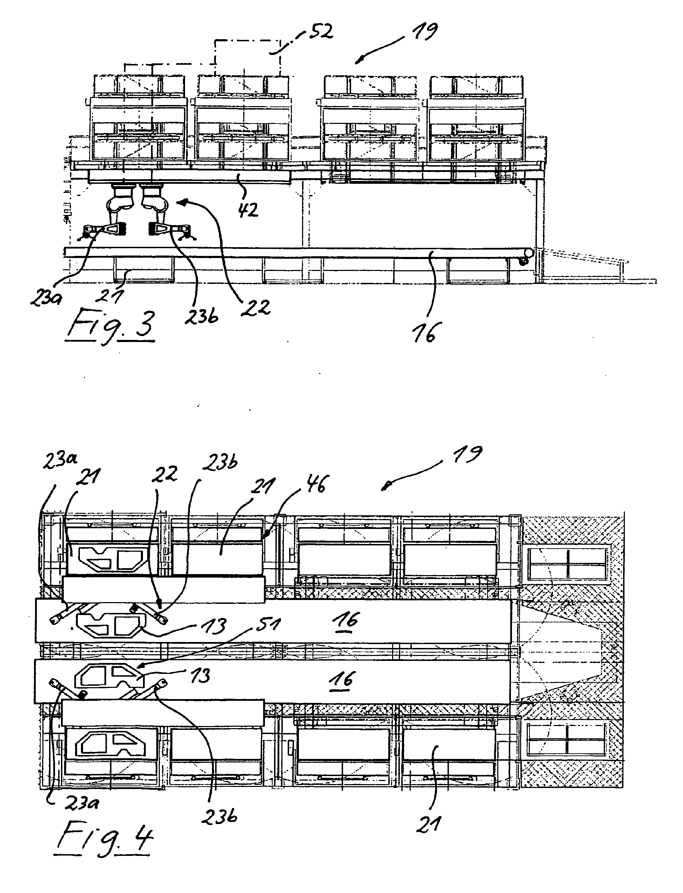

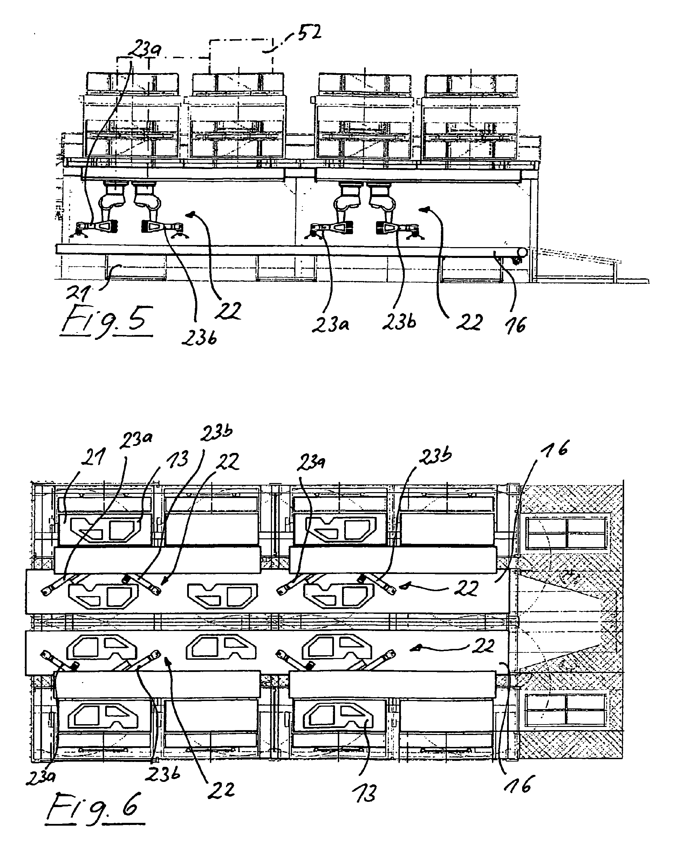

Figur 1 zeigt einen Teil einer Pressenstraße 11, wie er häufig in der Automatisierungstechnik, beispielsweise als Teil eines Presswerks in der Automobilindustrie, eingesetzt wird. Die Pressenstraße 11 umfasst eine Transferpresse 12, die plattenförmige Teile, insbesondere Metallblechplatinen, formt. Die Pressenleistung solcher Transferpressen 12 wird in Hüben pro Minute angegeben. So ist beispielsweise eine 17-Hub-Transferpresse 12 in der Lage, 17 Hübe in der Minute durchzuführen und dabei 17 gepresste Einzelteile zu pressen. Als Einzelteile lassen sich beispielsweise Seitenwände von Kraftfahrzeugen pressen, wie in den Figuren 4 und 6 dargestellt. Mit der Transferpresse ist es jedoch auch möglich, Doppelteile zu pressen, also beispielsweise mit 17 Hüben 17-mal zwei Teile 13. Schließlich ist es auch möglich, Vierfachteile zu produzieren.

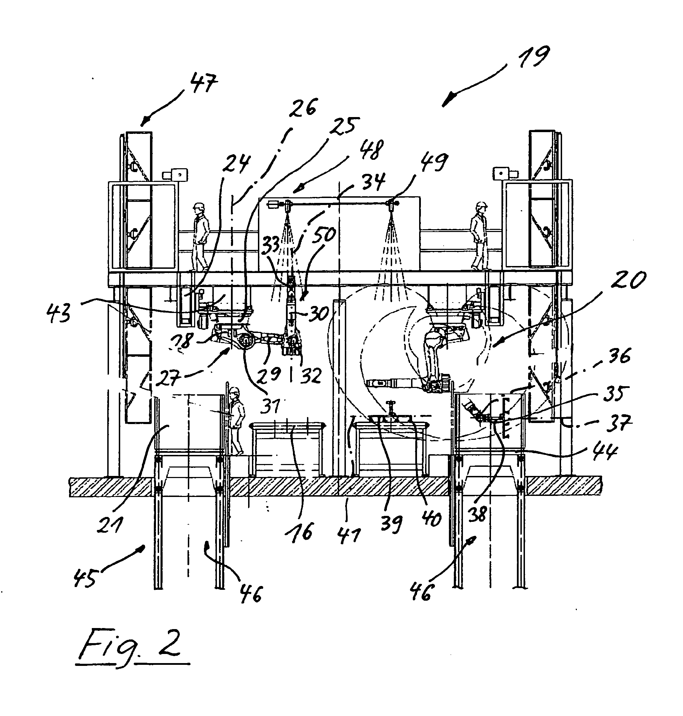

Mittels der Transferpresse 12 gepresste, stapelbare Teile 13, die im Folgenden der Einfachheit halber lediglich Teile 13 genannt werden, werden durch einen Entnahmeroboter 15 aus der Transferpresse 12 entnommen und durch eine Schwenkbewegung des Entnahmeroboters 15, gegebenenfalls kombiniert mit einer Linearbewegung, auf einer Förderbahn 16 einer Förderstation 17 abgelegt. Wie insbesondere in den Figuren 2 bis 6 dargestellt, besitzt die Förderstation 17 zwei parallel zueinander verlaufende Förderbahnen 16 in Form von Transportbändern, auf die die Teile mittels des Entnahmeroboters 15 abgelegt und dort vereinzelt weitertransportiert werden.

Die Teile 13 durchlaufen danach eine Inspektionsstrecke 18, in der die Qualität des mittels der Transferpresse 12 bewirkten Umformprozesses überprüft wird. Schlechtteile werden dort aussortiert.

Nach dem Durchlaufen der Inspektionsstrecke 18 gelangen die Teile 13 zur Vorrichtung 19 zum Stapeln der Teile 13. Die Förderstation 17 mit den beiden Förderbändern 16 ist ein Teil dieser Vorrichtung 19.

Wie insbesondere in den Figuren 1 bis 6 gezeigt, umfasst die Vorrichtung 19 eine Stapeleinrichtung 20, die Teile 13 vom Transportband entnimmt und in Stapelbehälter 21 einstapelt.

Wie insbesondere in den Figuren 4 bis 6 dargestellt, weist die Stapeleinrichtung 20 wenigstens ein Stapelroboter-Paar 22 mit zwei unabhängig voneinander arbeitenden Stapelrobotern 23a, 23b auf, die mit erster Stapelroboter 23a und zweiter Stapelroboter 23b bezeichnet sind.

Insbesondere Figur 2 zeigt, dass die beiden Stapelroboter 23a, 23b jeweils als Mehrachs-Knickroboter ausgebildet sind, die hier beispielhaft in siebenachsiger Ausführung dargestellt sind. Ferner sind die beiden Stapelroboter 23a, 23b an einer Trägereinheit 24 hängend angeordnet. Ein jeweiliger Stapelroboter 23a, 23b besitzt eine Roboterbasis 25, an der eine um eine in Gebrauchslage vertikale erste Schwenkachse 26 schwenkbare Bewegungseinheit 27 schwenkbar gelagert ist, die zunächst ein basisseitiges Schwenkteil 28 enthält, das um die vertikale erste Schwenkachse 26 verschwenkbar an der Roboterbasis 25 sitzt. Die Bewegungseinheit 27 enthält ferner einen von einem Oberarm 29 und einem Unterarm 30 gebildeten Knickarm. Der Oberarm 29 des Knickarms ist einenends um eine in Gebrauchslage horizontale zweite Schwenkachse 31 verschwenkbar mit dem Schwenkteil 28 und andererseits um eine horizontale dritte Achse 32 schwenkbar mit dem zugewandten Ende des Unterarms 30 verbunden.

Zur Bewegungseinheit 27 gehört ferner ein an dem dem Oberarm 29 entgegengesetzten Ende des Unterarms 30 angeordnetes Drehglied 33, das um eine in Längsrichtung des Unterarms 30 verlaufende vierte Achse 34 verdrehbar ist. An dem dem Unterarm 30 entgegengesetzten Ende des Drehglieds 33 ist ein Schwenkglied 35 angeordnet, das um eine quer zur vierten Achse 34 verlaufende fünfte Achse 36 schwenkbar mit dem Drehglied 33 verbunden ist. An das Schwenkglied 35 ist ein um eine quer zur fünften Achse 36 verlaufende sechste Achse 37 verdrehbares Rotationsglied (nicht dargestellt) angesetzt, an dem ein Tragteil 38 befestigt ist, so dass das Tragteil 38 die Drehbewegung des Rotationsglieds mitmacht. Das Tragteil 38 trägt vorzugsweise eine Hebeeinrichtung 39 mit Vakuumsaugern 40. Die Anordnung ist dabei so getroffen, dass sich das Tragteil 38 in Richtung der sechsten Achse 37 vom Schwenkglied 35 beziehungsweise vom an diesem sitzenden Rotationsglied weg erstreckt und dass die Hebeeinrichtung 39 ein die Vakuumsauger 40 haltende Halteeinrichtung enthält, die um eine quer zur sechsten Achse 37 gerichtete siebte Achse 41 verdrehbar mit dem Tragteil 38 verbunden ist. Bezüglich weiterer und näherer Details über den Aufbau und den Bewegungsablauf eines solchen siebenachsigen Knickroboters wird im Übrigen auf die EP 1 623 773 verwiesen.

Die Stapeleinrichtung 20 besitzt ferner eine Linearführungseinrichtung 42 zur horizontalen Linearführung der beiden Stapelroboter 23a, 23b in nachfolgend noch beschriebener Weise. Zur Linearführungseinrichtung 42 gehört ferner die Roboterbasis 25, die schlittenartig ausgeführt ist und an Führungsschienen linear geführt ist, die ihrerseits wiederum an einem Schienenmodul 43 sitzen.

Die Schienenmodule 43 sind wiederum an der portalartigen Trageinrichtung 24 befestigt. Die beiden Stapelroboter 23a, 23b haben also jeweils wenigstens eine zusätzliche Achse, nämlich eine Verfahrachse in X- und/oder in Y-Richtung.

Wie insbesondere in Figur 2 dargestellt, stehen die Stapelbehälter 21 benachbart zu den Förderbahnen 16 auf einer Plattform 44, die Teil einer Verfahreinrichtung 45 ist. Die Verfahreinrichtung 45 umfasst ferner einen Stapelbehälter-Aufzug 46, über den mit Teilen 13 beladene Stapelbehälter 21 vorzugsweise über einen Durchbruch im Gebäudeboden ein Stockwerk tiefer gefahren werden können, wo sie dann gegen unbeladene Stapelbehälter 21 ausgetauscht werden können. Die Stapeleinrichtung 20 besitzt ferner einen Tooling-Aufzug 47, mit mehreren Tooling-Wechselplätzen, die je nach Bedarf in den Schwenkbereich der Stapelroboter 23a, 23b hoch- oder heruntergefahren werden können, wodurch ein Tooling-Wechsel durch Anfahren eines mit dem gewünschten Tooling/Werkzeug bestückten Tooling-Wechselplatzes durch den Stapelroboter 23a, 23b durchgeführt werden kann. Ein solches Tooling ist beispielsweise die Hebeeinrichtung 39 mit den Vakuumsaugern 40. Schließlich umfasst die Stapeleinrichtung 20 noch ein Kamerasystem 48 mit einer oder mehreren Kameras 49, die auf die Förderbahnen 16 gerichtet sind, um den Stapelvorgang zu überwachen.

Wie ebenfalls in Figur 2 dargestellt, können die Stapelroboter 23a, 23b in eine Parkposition 50 bewegt werden, in der ein freier Zugang zu einem bestimmten Stapelbehälter 21 ermöglicht ist, so dass Teile von der Förderbahn 16 manuell in den Stapelbehälter 21 eingestapelt werden können.

Die Figuren 3 und 4 zeigen ein erstes Ausführungsbeispiel der erfindungsgemäßen Vorrichtung 19. Es sind hier zwei Stapelroboter-Paare 22 mit jeweils zwei Stapelrobotern 23a, 23b vorgesehen, die auf gleicher Höhe entlang der Förderrichtung dem einen und dem anderen Förderband 16 zugeordnet sind. Wie insbesondere in Figur 3 dargestellt, befinden sich die beiden Roboterbasen 25 der Stapelroboter 23a, 23b eines Stapelroboter-Paares 22 relativ dicht beieinander gelegen. Obgleich die Figuren 3 und 4 dies nicht explizit zeigen, arbeiten die beiden Stapelroboter eines Stapelroboter-Paares 22 im Wechsel. Der erste Stapelroboter 23a nimmt also ein antransportiertes Teil 13, beispielsweise Einzelteil in Form einer Kfz-Seitenwand, an einer Aufnahmeposition 51 auf, indem die Vakuumsauger 40 das zugeordnete Teil 13 ansaugen. Synchron erfolgt die Aufnahme eines Teils 13 auch durch den ersten Stapelroboter 23a des anderen, also dem anderen Förderband zugeordneten Stapelroboter-Paars 22. Gleichzeitig zur Aufnahme des Teils 13 durch den ersten Stapelroboter 23a legt der zweite Stapelroboter 23b ein bereits aufgenommenes Teil 13 in den Stapelbehälter 21 ab, stapelt dieses Teil also in den Stapelbehälter 21 ein. Als nächstes wird das durch den ersten Stapelroboter 23a aufgenommene Teil 13 mittels einer Schwenkbewegung um die erste Schwenkachse 26 an den Stapelbehälter 21 überführt, während gleichzeitig der zweite Stapelroboter 23b unbestückt ebenfalls um die erste Schwenkachse 26 zurückschwenkt (Zwischenphase). Schließlich wird das mittels des ersten Stapelroboters 23a aufgenommene Teil 13 in den Stapelbehälter 21 eingestapelt, in den zuvor bereits der zweite Stapelroboter 23b sein Teil 13 eingestapelt hat, während gleichzeitig der zweite Stapelroboter 23b an der Aufnahmeposition 51 ein neues Teil von der Förderbahn 16 aufnimmt. Diese Aktionen laufen parallel auch beim Stapelroboter-Paar 22 des anderen Förderbandes 16 ab. Insgesamt sind hier also vier Stapelroboter 23a, 23b tätig, wodurch die Stapelleistung gegenüber herkömmlichen Stapeleinrichtungen deutlich erhöht werden kann. Sind die gemeinsam durch die beiden Stapelroboter 23a, 23b zu beladenden Stapelbehälter 21 voll, so werden die beiden Stapelroboter 23a, 23b des Stapelroboter-Paars 22 entlang der Linearführungseinrichtung 42 linear zum nächsten Stapelbehälter 21 verlagert, der sich beim Beladen des anderen Stapelbehälters 21 in der Wartestellung befunden hat. Dies kann durch Verlagerung der Stapelroboter 23a, 23b in X-Richtung bei hintereinander angeordneten Stapelbehältern 21 oder in Y-Richtung bei parallel zueinander angeordneten Stapelbehältern 21 erfolgen. Der beladene Stapelbehälter 21 wird dann mit dem Stapelbehälter-Aufzug 46 nach unten aus der Stapeleinrichtung 20 herausgefahren und dort durch einen unbeladenen Stapelbehälter 21 ersetzt. All dies geschieht zu einem Zeitpunkt, in dem die beiden Stapelroboter 23a, 23b der jeweiligen Stapelroboter-Paare 22 bereits Teile in den hinteren Stapelbehälter 21 einstapeln. Es gibt hier also keine Stillstandszeiten durch Stapelbehälter-Wechsel.

Die Figuren 5 und 6 zeigen ein zweites Ausführungsbeispiel der erfindungsgemäßen Vorrichtung 19. Im Gegensatz zum bereits beschriebenen ersten Ausführungsbeispiel ist hier die Anzahl der Stapelroboter-Paare 22 verdoppelt, wobei jeweils zwei Stapelroboter-Paare in Förderrichtung entlang einer gemeinsamen Förderbahn 16 angeordnet sind. Die Arbeitsweise der Stapelroboter 23a, 23b eines jeweiligen Stapelroboter-Paars 22 ist identisch zum zuvor beschriebenen ersten Ausführungsbeispiel. Im Unterschied zum ersten Ausführungsbeispiel wird jedoch jedes zweite Teil 13 von den in Förderrichtung zuerst erreichten Stapelroboter-Paaren 22 durchgelassen, so dass sie schließlich zu den hinteren Stapelroboter-Paaren 22 gelangen, wo sie dann eingestapelt werden. Auch hier stapeln die beiden Stapelroboter 23a, 23b eines Stapelroboter-Paars 22 Teile 13 in einen gemeinsamen Stapelbehälter 21 ein.

## Patentansprüche

1. Vorrichtung zum Stapeln von stapelbaren Teilen (13), insbesondere Pressteilen, mit einer Förderstation (17) mit wenigstens einer Förderbahn (16), auf der die Teile (13) vereinzelt antransportierbar sind, und wenigstens einem Stapelbehälter (21), in den die Teile (13) einstapelbar sind, wobei zur Überführung der Teile (13) zwischen der Förderstation (17) und dem Stapelbehälter (21) eine Stapeleinrichtung (20) vorgesehen ist, die Teile von der Förderbahn (16) der Förderstation (17) aufnimmt und in den Stapelbehälter (21) einstapelt, wobei die Stapeleinrichtung (20) wenigstens ein, zwei unabhängig voneinander arbeitende Stapelroboter (23a, 23b) enthaltendes Stapelroboter-Paar (22) aufweist, wobei die Stapelroboter (23a, 23b) im Wechsel oder gleichzeitig Teile (13) von der Förderbahn (16) aufnehmen und über eine Steuereinrichtung (52) derart angesteuert sind, dass ein erster und/oder zweiter Stapelroboter (23a, 23b) wenigstens ein Teil (13) von der Förderbahn (16) aufnimmt, während gleichzeitig der zweite und/oder erste Stapelroboter (23a, 23b) ein bereits aufgenommenes Teil (13) an den von beiden Stapelrobotern (23a, 23b) genutzten Stapelbehälter (21) überführt oder dort einstapelt, wobei bei gleichzeitiger Aufnahme der Teile (13) durch ersten und zweiten Stapelroboter (23a, 23b) ein gleichzeitiges Einstapeln in den gemeinsamen Stapelbehälter (21) an zwei verschiedenen Stapelplätzen erfolgt, **dadurch gekennzeichnet, dass** zwei Stapelroboter-Paare (22) in Reihe entlang einer gemeinsamen Förderbahn (16) angeordnet sind, denen jeweils ein eigener, beim Einstapeln der Teile (13) durch beide Stapelroboter (23a, 23b) eines jeweiligen Stapelroboter-Paares (22) gemeinsam genutzter Stapelbehälter (21) zugeordnet ist, wobei die beiden Stapelroboter-Paare (22) derart ausgebildet sind, dass jedes zweite Teil (13) von dem in Förderrichtung zuerst erreichten Stapelroboter-Paar (22) zum Einstapeln für das nachgeordnete Stapelroboter-Paar (22) durchgelassen wird.

2. Vorrichtung nach einem der vorhergehenden Ansprüche, **dadurch gekennzeichnet, dass** dem wenigstens einen Stapelroboter-Paar (22) mehrere Stapelbehälter (21) zugeordnet sind, von denen jeweils beim Einstapeln nur einer durch die beiden Stapelroboter (23a, 23b) des Stapelroboter-Paares (22) beladen wird, während die anderen Stapelbehälter (21) unbeladen in Wartestellung sind.

3. Vorrichtung nach einem der vorhergehenden Ansprüche, **dadurch gekennzeichnet, dass** die beiden Stapelroboter (23a, 23b) des wenigstens einen Stapelroboter-Paares (22) jeweils als Mehrachs-Knickroboter ausgebildet sind, mit wenigstens vier Schwenkachsen (26, 31, 32, 34), von denen eine erste vertikale Schwenkachse (26) eine zwischen der Förderbahn (16) und dem Stapelbehälter (21) stattfindende Schwenkbewegung ermöglicht.

4. Vorrichtung nach einem der vorhergehenden Ansprüche, **dadurch gekennzeichnet, dass** die Stapeleinrichtung (20) eine Verfahreinrichtung (45) zum Verfahren der Stapelbehälter (21) zwischen einer Beladeposition und einer Wechselposition zum Austausch von mit eingestapelten Teilen (13) beladenen Stapelbehältern (21) durch unbeladene Stapelbehälter (21) aufweist.

5. Verfahren zum Stapeln von stapelbaren Teilen (13), insbesondere Pressteilen, das Verfahren mit folgenden Schritten:
- Antransport von auf wenigstens einer Förderbahn (16) vereinzelt abgelegten Teilen (13),
- Aufnehmen von Teilen (13) von der Förderbahn (16) mittels zweier, jeweils zwei unabhängig voneinander arbeitende Stapelroboter (23a, 23b) enthaltenden Stapelroboter-Paare (22), wobei ein erster Stapelroboter eines jeweiligen Stapelroboter-Paares (22) ein Teil (13) von der Förderbahn (16) aufnimmt, während gleichzeitig ein bereits aufgenommenes Teil (13) durch einen unabhängig vom ersten Stapelroboter (13a) arbeitenden zweiten Stapelroboter (23b) eines jeweiligen Stapelroboter-Paares (22) in einen Stapelbehälter (21) eingestapelt wird oder an den Stapelbehälter (21) überführt wird oder wenigstens ein anderes Teil (13) von der Förderbahn (16) aufgenommen wird, wobei im Falle des Überführens dies mittels einer ein Verschwenken des zweiten Stapelroboters (23b) umfassenden Überführungsbewegung erfolgt, wobei die Stapelroboter-Paare (22) in Reihe entlang einer gemeinsamen Förderbahn (16) angeordnet sind, wobei jedes zweite Teil von dem in Förderrichtung zuerst erreichten Stapelroboter-Paar (22) zum Einstapeln für das nachgeordnete Stapelroboter-Paar (22) durchgelassen wird.
- Überführen des durch den ersten Stapelroboter (23a) eines jeweiligen Stapelroboter-Paares (22) aufgenommenen Teils (13) an den Stapelbehälter (21), der im Falle des Einstapelns oder Überführens bereits durch den zweiten Stapelroboter (23b) eines jeweiligen Stapelroboter-Paares (22) genutzt wurde, durch eine Überführungsbewegung, die ein Verschwenken des ersten Stapelroboters (23a) umfasst, während gleichzeitig der zweite Stapelroboter (23b) das aufgenommene andere Teil (13) in den Stapelbehälter (21) einstapelt oder unbestückt rückgeführt wird oder an den Stapelbehälter (21) überführt,
- Einstapeln des vom ersten Stapelroboter (23a) aufgenommenen Teils (13) in den Stapelbehälter (21), während gleichzeitig der zweite Stapelroboter (23b) ein weiteres Teil von der Förderbahn (16) aufnimmt, unbestückt rückgeführt wird oder das aufgenommene andere Teil (13) in denselben Stapelbehälter (21), der vom ersten Stapelroboter (23a) zum Einstapeln genutzt wird, in einen anderen Stapelplatz einstapelt.

6. Verfahren nach Anspruch 5, **dadurch gekennzeichnet, dass** wenigstens einer der Stapelroboter (23a, 23b) in hängender Anordnung arbeitet.

7. Verfahren nach einem der Ansprüche 5 oder 6, **dadurch gekennzeichnet, dass** die einem gemeinsamen Stapelbehälter (21) zugeordneten beiden Stapelroboter (23a, 23b) eines Stapelroboter-Paares (22) jeweils in eine Parkposition (50) bewegt werden können, die ein manuelles Einstapeln der Teile (13) in den Stapelbehälter (21) erlaubt.

8. Verfahren nach einem der Ansprüche 5 oder 7, **dadurch gekennzeichnet, dass** die beiden Stapelroboter (23a, 23b) eines Stapelroboter-Paares (22) Teile (13) so lange in den gemeinsamen Stapelbehälter (21) einstapeln, bis dieser vollständig belegt ist, und dann Teile (13) in den nächsten gemeinsamen Stapelbehälter (21) einstapeln, der sich bereits leer in einer Warteposition befindet.

9. Verfahren nach Anspruch 8, **dadurch gekennzeichnet, dass** sich wenigstens einer der beiden Stapelroboter (23a, 23b) eines Stapelroboter-Paares (22) beim Wechsel auf einen anderen gemeinsamen Stapelbehälter (21) linear verfahren lässt.

## Claims

1. Device for stacking stackable parts (13), in particular pressings, the device comprising a conveying station (17) with at least one conveying track (16), on which the parts (13) can be transported individually, and at least one stacking container (21), into which the parts (13) can be stacked, wherein a stacking device (20), which picks up parts from the conveying track (16) of the conveying station (17) and stacks them into the stacking container (21), is provided between the conveying station (17) and the stacking container (21), wherein the stacking device (20) comprises at least one stacking robot pair (22) of two independently operating stacking robots (23a, 23b), wherein the stacking robots (23a, 23b) alternately or simultaneously pick up parts (13) from the conveying track (16) and are controlled by a control unit (52) in such a way that a first and/or a second stacking robot (23a, 23b) picks up at least one part (13) from the conveying track (16) while the second and/or the first stacking robot (23a, 23b) transfers an already picked-up part (13) to the stacking container (21) used by both stacking robots (23a, 23b) and stacks it there, wherein the parts (13), if picked up simultaneously by the first and the second stacking robot (23a, 23b), are simultaneously stacked into the common stacking container (21) at two different stacking locations, **characterised in that** two stacking robot pairs (22) are arranged in series along a common conveying track (16), to which is assigned its own stacking container (21) used jointly by both stacking robots (23a, 23b) of a respective stacking robot pair (22) when stacking-in the parts (13), the two stacking robot pairs (22) being designed such that every other part (13) is allowed to pass by the stacking robot pair (22) reached first in the conveying direction for stacking-in for the following stacking robot pair (22).

2. Device according to any of the preceding claims, **characterised in that** a plurality of stacking containers (21), only one of which is loaded by the two stacking robots (23a, 23b) of the stacking robot pair (22) in the stacking-in process, while the other stacking containers (21) are empty in waiting position, are assigned to the at least one stacking robot pair (22).

3. Device according to any of the preceding claims, **characterised in that** the two stacking robots (23a, 23b) of the at least one stacking robot pair (22) are designed as multiaxial articulated robots, having at least four pivot axes (26, 31, 32, 34), of which a first, vertical, pivot axis (26) facilitates a pivoting movement between the conveying track (16) and the stacking container (21).

4. Device according to any of the preceding claims, **characterised in that** the stacking device (20) comprises a traversing device (45) for traversing the stacking containers (21) between a loading position and an exchange position for exchanging stacking containers (21) loaded with stacked-in parts (13) against empty stacking containers (21).

5. Method for stacking stackable parts (13), in particular pressings, the method comprising the following steps:
- the conveying of parts (13) individually placed on at least one conveying track (16) to the stacking site,
- the picking-up of parts (13) from the conveying track (16) by means of two stacking robot pairs (22), each containing two independently operating stacking robots (23a, 23b), wherein a first stacking robot of a respective stacking robot pair (22) picks up a part (13) from the conveying track (16), while simultaneously a part (13) already picked up is stacked into a stacking container (21) or transferred to the stacking container (21) by a second stacking robot (23b) of a respective stacking robot pair (22), which operates independently of the first stacking robot (23a), or while at least one other part (13) is picked up from the conveying track (16), wherein, in the case of a transfer operation, the transfer is accomplished by means of a transfer movement including a pivoting of the second stacking robot (23b), wherein the stacking robot pairs (22) are arranged in series along a common conveying track (16), wherein every other part (13) is allowed to pass by the stacking robot pair (22) reached first in the conveying direction for stacking-in for the following stacking robot pair (22),
- the transfer of the part (13) picked up by the first stacking robot (23a) of a respective stacking robot pair (22) to the stacking container (21), which, in the case of a stacking-in or transfer operation, has already been used by the second stacking robot (23b) of a respective stacking robot pair (22), in a transfer movement including a pivoting of the first stacking robot (23a), while at the same time the second stacking robot (23b) stacks the picked-up other part (13) into the stacking container (21) or is returned unloaded or transfers to the stacking container (21),
- the stacking of the part (13) picked up by the first stacking robot (23a) into the stacking container (21), while at the same time the second stacking robot (23b) picks up a further part (13) from the conveying track (16) or is returned unloaded or stacks the picked-up other part (13) into another stacking location in the stacking container (21) used for stacking-in by the first stacking robot (23a).

6. Method according to claim 5, **characterised in that** at least one of the stacking robots (23a, 23b) operates in a suspended arrangement.

7. Method according to claim 5 or 6, **characterised in that** each of the two stacking robots (23a, 23b) of a stacking robot pair (22) assigned to a common stacking container (21) can be moved into a parking position (50), which allows a manual stacking of the parts (13) into the stacking container (21).

8. Method according to any of claims 5 to 7, **characterised in that** the two stacking robots (23a, 23b) of a stacking robot pair (22) stack parts (13) into the common stacking container (21) until it is completely occupied and then stack parts (13) into the next common stacking container (21), which is already empty in a waiting position.

9. Method according to claim 8, **characterised in that** at least one of the two stacking robots (23a, 23b) of a stacking robot pair (22) is capable of linear traverse when changing to another common stacking container (21).

## Revendications

1. Dispositif pour empiler des pièces (13) empilables, en particulier des pièces moulées par compression, comprenant une station de convoyage (17) pourvue d'au moins une voie de convoyage (16), sur laquelle les pièces (13) peuvent être transportées de manière isolée, et comprenant au moins une caisse d'empilage (21), dans laquelle les pièces (13) peuvent être empilées, sachant qu'est prévu, pour le transfert des pièces (13) entre la station de convoyage (17) et la caisse d'empilage (21), un système d'empilage (20), qui réceptionne des pièces en provenance de la voie de convoyage (16) de la station de convoyage (17) et les empile dans la caisse d'empilage (21), sachant que le système d'empilage (20) présente au moins une paire de robots d'empilage (22) incluant deux robots (23a, 23b) d'empilage fonctionnant indépendamment l'un de l'autre, sachant que les robots d'empilage (23a, 23b) réceptionnent, en alternance ou simultanément, des pièces (13) en provenance de la voie de convoyage (16) et qu'ils sont pilotés par l'intermédiaire d'un système de commande (52) de telle manière qu'un premier et/ou un second robot d'empilage (23a, 23b) réceptionnent au moins une pièce (13) en provenance de la voie de convoyage (16), tandis que simultanément, le second et/ou le premier robot d'empilage (23a, 23b) transfèrent une pièce (13) déjà réceptionnée à la caisse d'empilage (21) utilisée par les deux robots d'empilage (23a, 23b) ou l'y empilent, sachant que dans le cas d'une réception simultanée des pièces (13) par le premier et le second robot d'empilage (23a, 23b), un empilement simultané dans la même caisse d'empilage (21) a lieu en deux emplacements différents d'empilage, **caractérisé en ce que** deux paires de robots d'empilage (22) sont disposées de manière alignée le long d'une voie de convoyage (16) commune, auxquelles est associé respectivement une caisse d'empilage (21) propre, utilisée en commun par les deux robots d'empilage (23a, 23b) d'une paire de robots d'empilage (22) respective lors de l'empilement des pièces (13), sachant que les deux paires de robots d'empilage (22) sont réalisées de telle manière que chaque deuxième pièce (13) en provenance de la paire de robots d'empilage (22) atteinte en premier lieu dans le sens de convoyage aux fins de l'empilage pour la paire de robots d'empilage (22) qui suit.

2. Dispositif selon l'une quelconque des revendications précédentes, **caractérisé en ce que** sont associées, à la au moins une paire de robots d'empilage (22), plusieurs caisses d'empilage (21), dont une seulement est chargée, respectivement lors de l'empilage, par les deux robots d'empilage (23a, 23b) de la paire de robots d'empilage (22), tandis que les autres caisses d'empilage (21), non chargées, sont maintenues en attente.

3. Dispositif selon l'une quelconque des revendications précédentes, **caractérisé en ce que** les deux robots d'empilage (23a, 23b) de la au moins une paire de robots d'empilage (22) sont réalisés respectivement sous la forme d'un robot articulé à plusieurs axes, pourvu d'au moins quatre axes de pivotement (26, 31, 32, 34), dont un premier axe de pivotement (26) vertical permet un mouvement de pivotement ayant lieu entre la voie de convoyage (16) et la caisse d'empilage (21).

4. Dispositif selon l'une quelconque des revendications précédentes, **caractérisé en ce que** le système d'empilage (20) présente un système de déplacement (45) servant à déplacer les caisses d'empilage (21) entre une position de chargement et une position de remplacement servant à remplacer des caisses d'empilage (21) chargées de pièces (13) empilées par des caisses d'empilage (21) non chargées.

5. Procédé servant à empiler des pièces (13) empilables, en particulier des pièces moulées par compression, lequel procédé comprend les étapes suivantes :
- transporter des pièces (13) déposées de manière isolée sur au moins une voie de convoyage (16) ;
- réceptionner des pièces (13) en provenance de la voie de convoyage (16) au moyen de deux paires de robots d'empilage (22) comprenant deux robots d'empilage (23a, 23b) fonctionnant indépendamment l'un de l'autre, sachant qu'un premier robot d'empilage d'une paire de robots d'empilage (22) respective réceptionne une pièce (13) en provenance de la voie de convoyage (16), tandis que simultanément, une pièce (13) déjà réceptionnée est empilée dans une caisse d'empilage (21) par un second robot d'empilage fonctionnant indépendamment du premier robot d'empilage (13a), d'une paire de robots d'empilage (22) respective ou est transférée à la caisse d'empilage (13) ou au moins une autre pièce (13) en provenance de la voie de convoyage (16) est réceptionnée, sachant que dans le cas du transfert, cela est effectué au moyen d'un mouvement de transfert comprenant le pivotement du deuxième robot d'empilage (23b), sachant que les paires de robots d'empilage (22) sont disposées de manière alignée le long d'une voie de convoyage (16) commune, sachant que chaque deuxième pièce est transmise par la paire de robots d'empilage (22) atteinte en premier lieu dans le sens de convoyage, aux fins de l'empilement, pour la paire de robots d'empilage (22) qui suit ;
- transférer la pièce (13) réceptionnée par le premier robot d'empilage (23a) d'une paire de robots d'empilage (22) respective à la caisse d'empilage (21) qui est déjà utilisée, dans le cas de l'empilement ou du transfert, par le deuxième robot d'empilage (23b) d'une paire de robots d'empilage (22) respective, par un mouvement de transfert, qui comprend un pivotement du premier robot d'empilage (23a), tandis que simultanément le second robot de pivotement (23b) empile l'autre pièce (13) réceptionnée dans la caisse d'empilage (21) ou est ramené sans charge ou la transfère à la caisse d'empilage (21) ;
- empiler la pièce (13) réceptionnée par le premier robot d'empilage (23a) dans la caisse d'empilage (21), tandis que simultanément le second robot d'empilage (23b) réceptionne une pièce supplémentaire en provenance de la voie de convoyage (16), revient à sa position initiale sans charge ou empile, en un autre emplacement d'empilage, l'autre pièce (13) réceptionnée dans la même caisse d'empilage (21), qui est utilisée par le premier robot d'empilage (23a) aux fins de l'empilage.

6. Procédé selon la revendication 5, **caractérisé en ce qu'**au moins un des robots d'empilage (23a, 23b) fonctionne en positon suspendue.

7. Procédé selon l'une quelconque des revendications 5 ou 6, **caractérisé en ce que** les deux robots d'empilage (23a, 23b), associés à une caisse d'empilage (21) commune, d'une paire de robots d'empilage (22), peuvent être amenés respectivement dans une position de repos (50), qui permet un empilement manuel des pièces (13) dans la caisse d'empilage (21).

8. Procédé selon l'une quelconque des revendications 5 ou 7, **caractérisé en ce que** les deux robots d'empilage (23a, 23b) d'une paire de robots d'empilage (22) empilent des pièces (13) dans la caisse d'empilage (21) commune jusqu'à ce que cette dernière soit pleine, puis empilent des pièces (13) dans la prochaine caisse d'empilage (21) commune, laquelle, vide, est en attente.

9. Procédé selon la revendication 8, **caractérisé en ce qu'**au moins un des deux robots d'empilage (23a, 23b) d'une paire de robots d'empilage (22) se déplace de manière linéaire lors du changement pour une autre caisse d'empilage (21) commune.
